# EUROPÄISCHE PATENTANMELDUNG

(11) **EP 4 442 342 A1**
(43) Veröffentlichungstag der Anmeldung: **09.10.2024**
(21) Anmeldenummer: 24164912.8
(22) Anmeldetag: 20.03.2024
(51) Int. Cl.: B01D 9/00

(54) **VERFAHREN ZUR UND THERMOKOMPRESSIONSANLAGE MIT GEGENSOLEVORWÄRMUNG**

(30) Priorität: 21.03.2023 DE 102023107009
(71) Anmelder: Südwestdeutsche Salzwerke AG, 74076 Heilbronn (DE)
(72) Erfinder: EMANS, Maximilian, 83404 Ainring (DE); REIME, Lars, 83410 Laufen (DE)
(74) Vertreter: Witte, Weller & Partner Patentanwälte mbB

(57) **Zusammenfassung**

Bei einem Verfahren, bei dem in einem Kristallisator (KR) einer Thermokompressionsanlage mit mechanischer oder thermischer Brüdenverdichtung und Frischsolevorwärmung im Gegenstrom Kristallisat aus einer Sole erzeugt wird, werden nicht verdichtete Brüden indirekt an einem Teilstrom (GS) zuströmender, nicht mit heißem Kondensat auf maximal mögliche Temperatur vorgewärmter Sole kondensiert werden. Eine Thermokompressionsanlage, mit der das Verfahren durchgeführt werden kann, wird ebenfalls beschrieben.

## Beschreibung

Die Erfindung betrifft allgemein Thermokompressionsanlagen, mit denen ein Kristallisat aus einer gesättigten Sole durch Wasserentzug erzeugt wird. Speziell betrifft die Erfindung ein Verfahren, bei dem in einem Kristallisator einer Thermokompressionsanlage mit mechanischer oder thermischer Brüdenverdichtung und Frischsolevorwärmung im Gegenstrom Kristallisat aus einer Sole erzeugt wird, sowie eine Thermokompressionsanlage, mit der das Verfahren durchgeführt werden kann.

Das erfindungsgemäße Verfahren und die erfindungsgemäße Thermokompressionsanlage werden insbesondere bei der Gewinnung von Salz aus Sole angewandt bzw. verwendet. Aus Sole gewonnenes Salz wird auch als Siedesalz bezeichnet.

Nach dem Stand der Technik, beispielsweise DE 36 09 705 A1, wird die in industrielle Kristallisatoren zulaufende gesättigte oder fast gesättigte Sole (Frischsole) durch ablaufendes Kondensat oder ablaufende heiße Mutterlauge oder beidem vorgewärmt und möglichst heiß dem Kristallisator zugeführt. Dazu werden nach dem Stand der Technik Vorwärmer, d.h. Wärmeüberträger verschiedener Bauart verwendet, die so ausgelegt sind, dass die zulaufende Frischsole, soweit technisch möglich, vorgewärmt wird. Praktisch limitieren die Investitionskosten die Größe der Wärmeübertragerflächen und damit die maximal erreichbare Temperatur. Die im Kristallisator entstehenden Brüden, worunter der im Kristallisator entstehende Wasserdampf zu verstehen ist, der sich auf hohem Temperaturniveau befindet, werden nach dem Stand der Technik mechanisch oder thermisch komprimiert, ggf. sattgespritzt und an Wärmetauscherflächen am oder im Kristallisator kondensiert, so dass die latente Wärme der Brüden auf hohem Temperaturniveau im System erhalten bleibt. Die Regelung des Drucks im Kristallisator erfolgt nach dem Stand der Technik dadurch, dass, falls der Druck erhöht werden soll, extern Wärme auf hohem Temperaturniveau zugeführt wird, beispielsweise durch Zufuhr von Zusatzdampf in den Wärmetauscher am oder im Kristallisator, oder dass, falls der Druck reduziert werden soll, die mittlere Temperatur der zugeführten Frischsole reduziert wird, beispielsweise dadurch, dass ein Teil der zugeführten Sole nicht oder nur teilweise durch ablaufendes heißes Kondensat bzw. ablaufende heiße Mutterlauge erwärmt wird, welches bzw. welche dann wärmer an die Umgebung abgegeben wird und aufgrund des niedrigen Temperaturniveaus in der Regel praktisch nicht mehr nutzbar ist. Aus thermischer Sicht entspricht das einer bewusst herbeigeführten schlechteren Ausnutzung der Vorwärmer. Üblicherweise wird die Zufuhr von nicht auf die maximal mögliche Temperatur erhitzter Sole dazu genutzt, erzeugtes Kristallisat unten im Apparat kühl als Suspension aus dem Kristallisator zu entnehmen, wobei gleichzeitig eine Einstellung des Korngrößenspektrums durch Sichtung durchgeführt wird. In der Praxis jedoch wird den Kristallisatoren stets mehr nicht auf die maximal mögliche Temperatur erhitzte Sole zugeführt als technisch, beispielsweise zur Entnahme des erzeugten Kristallisats und der Einstellung des Korngrößenspektrums notwendig wäre, um so den Druck im Apparat sicher kontrollieren zu können.

Weiterhin ist es Stand der Technik, dass Wärme auf hohem Temperaturniveau als Brüden an einen zusätzlichen Wärmeverbraucher abgegeben werden können, beispielsweise wie in DE 212 949 A1 beschrieben ist. Die direkte Druckregelung durch Abgabe von Brüden an die Umgebung ohne die Nutzung der latenten Wärme ist trivialerweise möglich, aber energetisch sehr ungünstig.

Zusammenfassend ist es also Stand der Technik, dass ein Wärmeüberschuss im System zwar beherrscht wird, in dem Wärme aber wie beschrieben nach außen abgegeben wird, so dass damit keine zusätzliche Produktion an Kristallisat erreicht werden kann. Faktisch besteht so zwischen der zum Betrieb der Anlage eingesetzten elektrischen oder thermischen Energie und der Produktionsmenge ein fester, fast linearer Zusammenhang.

JP S54 138 865 A offenbart eine Vorrichtung und ein Verfahren zur Erzeugung von Kristallisat aus einer Flüssigkeit. Die Vorrichtung weist einen Kristallisator und zwei weitere Behälter auf, die mit dem Kristallisator verbunden sind. Das Kristallisat wird in dem Kristallisator gewonnen. Den zwei weiteren Behältern ist jeweils eine Heizvorrichtung vorgeschaltet. Ein Teil des aus dem Kristallisator in einer Rohrleitung austretenden Dampfes wird in einem Verdichter komprimiert und wieder direkt in den Kristallisator eingespeist. Ein anderer Teil des aus dem Kristallisator austretenden Dampfes wird nicht verdichtet und der Heizvorrichtung zugeführt, die dem dem Kristallisator nachgeordneten weiteren Behälter vorgeschaltet ist.

Es ergibt sich daraus das Problem, dass eine Verringerung der spezifischen Energiemenge zur Herstellung einer bestimmten Kristallisatmenge mit einer thermischen Optimierung der Anlage nur in Wärmemangelsituationen möglich ist, d.h., wenn von außen zugeführte Wärme, in der Regel Zusatzdampf, eingespart werden kann. Moderne Anlagen können aber überwiegend praktisch ohne Zusatzdampf betrieben werden. Anders ausgedrückt sind zusätzliche Vorwärmer oder eine auf sonstige Art herbeigeführte Verbesserung des Wärmeübergangs zwischen dem ablaufenden Kondensat bzw. der ablaufenden Mutterlauge und der zugeführten Sole in der Regel nicht wirtschaftlich, weil damit keine zusätzliche Produktmenge generiert wird. Es würde lediglich der Energiebedarf zur Aufrechterhaltung des Prozesses in vergleichsweise selten auftretenden Situationen verringert werden.

Der beschriebene Stand der Technik weist weiterhin den Nachteil auf, dass aufgrund der indirekten Regelung des Drucks im Apparat über die Temperatur und der daraus resultierenden sehr trägen Reaktion des Systems auf regelnde Eingriffe wegen der zahlreichen Störgrößen eine automatische Regelung bis heute bei vielen derartigen Anlagen nicht dargestellt werden kann. Die Folge ist, dass wegen zwangsweise erforderlicher manueller Eingriffe eine im Sinne der Ausnutzung der Produktionskapazität optimale Fahrweise der Anlage praktisch nicht gewährleistet werden kann.

Vor diesem Hintergrund ist es eine Aufgabe der Erfindung, ein Verfahren bereitzustellen, mit dem überschüssige Wärme in einer Thermokompressionsanlage zur Erzeugung eines Kristallisats zur Steigerung der Produktion desselben genutzt werden kann, und nicht, in welcher Form auch immer, an die Umgebung abgegeben werden muss.

Des Weiteren ist es eine Aufgabe der Erfindung, eine Thermokompressionsanlage bereitzustellen, mit der das Verfahren durchgeführt werden kann.

Erfindungsgemäß wird die Aufgabe hinsichtlich des Verfahrens, bei dem in einem Kristallisator einer Thermokompressionsanlage mit mechanischer oder thermischer Brüdenverdichtung und Frischsolevorwärmung im Gegenstrom Kristallisat aus einer Sole erzeugt wird, dadurch gelöst, dass nicht verdichtete Brüden in einem Kondensator indirekt an einem Teilstrom dem Kristallisator zuströmender, nicht mit heißem Kondensat auf maximal mögliche Temperatur vorgewärmter Sole kondensiert wird.

Erfindungsgemäß wird ein Teilstrom der Brüden vor dem Verfahrensschritt der Verdichtung ausgekoppelt, jedoch nicht in irgendeiner Form an die Umgebung oder andere Aggregate abgegeben, sondern in einem Kondensator an dem Kristallisator zugeführter, nicht auf die maximal mögliche Temperatur erhitzter Sole indirekt kondensiert, wodurch Letztere erwärmt wird und somit der wesentliche Teil der thermischen Energie der Brüden, die latente Wärme, im Kristallisator verbleibt.

Ein wesentlicher Vorteil des Verfahrens besteht darin, dass die latente Wärme eines Teils der im Kristallisator entstehenden Brüden im Kristallisator gehalten wird, ohne dass dieser Teil der Brüden über den Kompressor bzw. Verdichter geführt wird, d.h. ohne dass mechanische oder thermische Energie zu dessen Verdichtung aufgewendet werden muss. Somit wird zusätzliches Kristallisat erzeugt. Der auf die Kristallisatmenge bezogene spezifische Energieverbrauch wird reduziert.

Bevorzugt wird nur ein Teilstrom der Sole erwärmt und so dem Apparat zugeführt, dass die Entnahme von Kristallisat weiterhin auf niedrigem Temperaturniveau möglich ist.

Bevorzugt wird weiterhin der Massenstrom der nicht verdichteten, ausgekoppelten Brüden durch ein Dampfregelventil beeinflusst, wodurch der Druck im Kristallisator direkt geregelt wird.

Weiterhin wird erfindungsgemäß eine Thermokompressionsanlage zur Gewinnung von Kristallisat aus Sole bereitgestellt, mit einem Kristallisator, dessen Brüdenraum direkt oder indirekt über eine Dampfleitung mit einem Kondensator verbunden ist, um einen Teil der dem Brüdenraum entnommenen nicht verdichteten Brüden in dem Kondensator an einem Teilstrom dem Kristallisator zugeführter, nicht auf die maximal mögliche Temperatur vorgewärmter Sole zu kondensieren.

Vorzugsweise ist in der Dampfleitung auf der Dampfseite des Kondensators ein Dampfregelventil angeordnet ist.

Weiter vorzugsweise ist der Kondensator über die Dampfleitung oder eine weitere Dampfleitung mit einer Entlüftung eines Heizkörpers des Kristallisators verbunden, um dem Kondensator Dampf, der dem Heizkörper zur Entfernung nicht kondensierbarer Gase entnommen wird, zuzuführen.

Bei dem erfindungsgemäßen Verfahren und der erfindungsgemäßen Thermokompressionsanlage wird vorzugsweise ein Kristallisator herkömmlicher Bauart verwendet, der auf dem Prinzip der mechanischen oder thermischen Brüdenverdichtung basiert, wobei die innere Strömungsführung nicht relevant ist, weiterhin ein Dampfregelventil herkömmlicher Bauart, welches mit einer Dampfleitung mit entsprechendem Querschnitt mit einer beliebigen Stelle des Brüdenraums des Kristallisators verbunden ist, weiterhin ein Kondensator herkömmlicher, beliebiger Bauart, in dem die Brüden an zuströmender Sole kondensiert werden, und welcher dampfseitig mit dem Dampfregelventil verbunden ist und soleseitig von nicht auf das Temperaturniveau im Kristallisator vorgewärmter Sole durchströmt wird, weiterhin eine elektronische Regeleinheit, durch welche der Öffnungsgrad des Dampfregelventils dynamisch so gesteuert wird, dass der Druck im Brüdenraum des Kristallisators konstant gehalten oder einem sich in vorgegebener Weise zeitlich ändernden Wert nachgeführt wird.

Da die Druckregelung vorzugsweise direkt über das Öffnen und Schließen des Dampfregelventils erfolgt, ergibt sich als weiterer Zweck der Erfindung, dass sie es ermöglicht, den Druck im Kristallisator trotz vieler Störgrößen automatisiert zu kontrollieren, weil eine indirekte Beeinflussung des thermischen Gleichgewichts durch die mittlere Temperatur der zugeführten Sole nicht mehr notwendig ist. Da mit diesem einfachen Aufbau der wesentliche Energiegehalt der Brüden, die latente Wärme, im Kristallisator gehalten wird, erfolgt der Druckabfall im Kristallisator durch den Dampfaustritt deutlich langsamer, als würde man die Brüden ungenutzt in die Umgebung ablassen bzw. einem anderen Wärmeverbraucher zuführen. Der Druck im Kristallisator ist damit gut kontrollierbar.

Ein weiterer Vorteil der Erfindung gegenüber dem Stand der Technik besteht darin, dass die kleinen Dampfströme, die zur Entfernung nicht kondensierbarer Gase im Kondensat aus der Heizkammer des Kristallisators ausgekoppelt werden müssen und deren Wärmeinhalt technisch bedingt nicht genutzt wird, dem erfindungsgemäßen zusätzlichen Vorwärmer (zusätzlicher Kondensator) dampfseitig zugeführt werden können und somit die latente Wärme auch dieser Dampfströme im Wesentlichen im System gehalten wird.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
Fig. 1 eine Thermokompressionsanlage gemäß dem Stand der Technik; und
Fig. 2 ein Ausführungsbeispiel einer Thermokompressionsanlage gemäß der Erfindung.

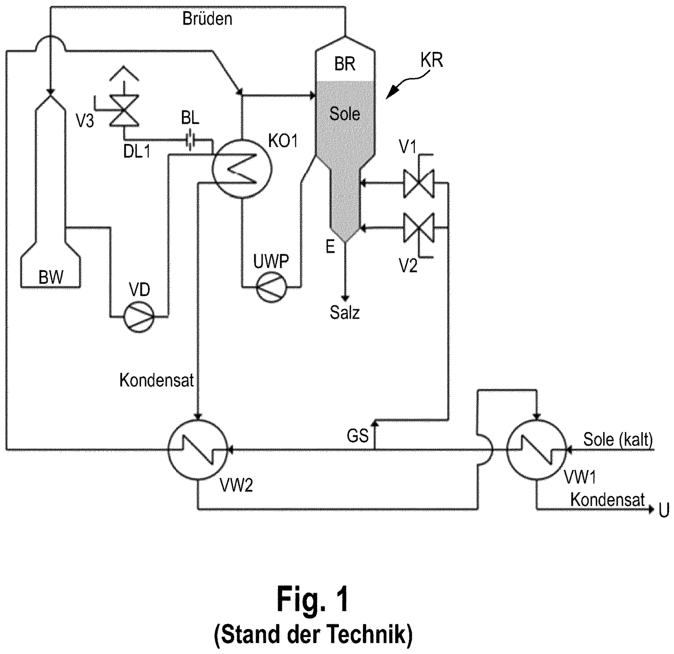

Zunächst wird mit Bezug auf Fig. 1 die Siedesalzherstellung in einer Thermokompressionsanlage gemäß dem Stand der Technik beschrieben.

In einem Kristallisator KR befindet sich siedende Sole mit einer Temperatur von etwa 115 C. Die entstehenden Brüden werden aus einem Brüdenraum BR des Kristallisators KR über einen Brüdenwäscher BW einem Kompressor bzw. Verdichter VD zugeführt. Dort erfolgt eine Druckerhöhung um einen Faktor von etwa 1,8. Die heißen Brüden werden in einem Kondensator KO1, auch als Heizkörper des Kristallisators KR bezeichnet, indirekt an Sole, die dem Kristallisator KR über eine Umwälzpumpe UWP entnommen und erwärmt dorthin zurückgeführt wird, kondensiert. Das aus dem Kondensator KO1 ablaufende heiße Kondensat wird mit einer Temperatur von etwa 120-130 °C einem ersten und später einem zweiten Vorwärmer VW2 bzw. VW1 zugeführt und schließlich mit 30-50 °C an die Umgebung U abgegeben. In den Vorwärmern VW2 bzw. VW1 wird im Gegenstrom zulaufende kalte Frischsole geführt. Die Frischsole wird von Umgebungstemperatur, beispielsweise 20°C, fast auf die Siedetemperatur erhitzt und kontinuierlich in den Kristallisator KR eingespeist. Um Kristallisat (Salz) auf geringem Temperaturniveau entnehmen zu können und um gleichzeitig den Druck im Kristallisator KR kontrollieren zu können, wird nach dem Vorwärmer VW1 ein Teilstrom der Sole entnommen und, gemäß dem Stand der Technik, mit einer Temperatur von beispielsweise etwa 50 K unterhalb der Siedetemperatur zumindest zum Teil in den unteren Teil des Kristallisators KR (auch als Salzsack bezeichnet) eingespeist. Der Volumenstrom dieser sog. Gegensole GS wird nach dem Stand der Technik über ein oder mehrere automatische oder handbetriebene Regelklappen, hier beispielhaft V1 und V2, an unterschiedlichen Stellen am Salzsack eingestellt.

Das Kristallisat (Salz) wird an einer Entnahmestelle E aus dem Kristallisator KR entnommen.

Die Abgabe einer kleinen Menge an verdichtetem Dampf aus dem Heizkörper bzw. Kondensator KO1 an die Atmosphäre zur Entfernung nicht kondensierbarer Gase ist technisch unvermeidbar. Realisiert wird das hier durch eine Dampfleitung DL1 mit geringem Durchmesser, die mit einer Blende BL ausgestattet ist, die anlagenspezifisch ausgeführt ist.

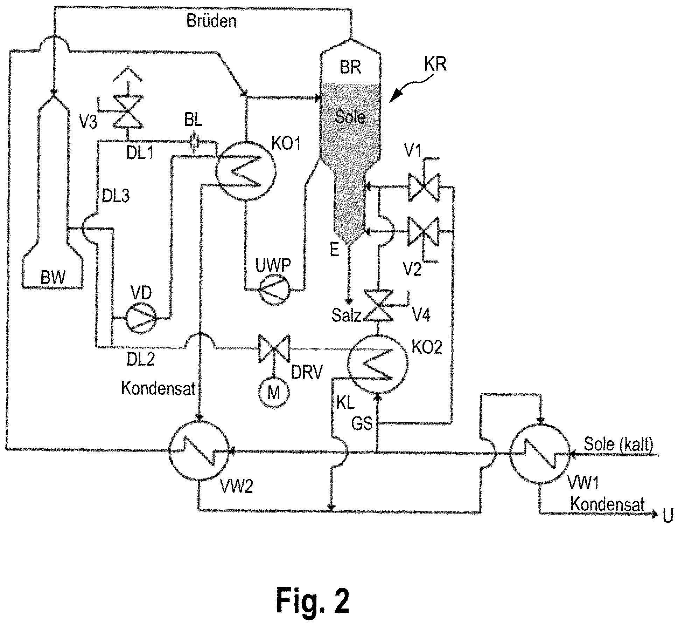

Mit Bezug auf Fig. 2 wird nun eine erfindungsgemäße Thermokompressionsanlage zur Siedesalzherstellung beschrieben, wobei nachfolgend die Unterschiede der erfindungsgemäßen Anlage gegenüber der Anlage in Fig. 1 beschrieben werden. Soweit nichts anderes angegeben ist, gilt die Beschreibung der Thermokompressionsanlage in Fig. 1 und des zugehörigen Verfahrens auch für die Thermokompressionsanlage in Fig. 2 und das damit ausgeführte Verfahren.

In der Thermokompressionsanlage gemäß Fig. 2 wird erfindungsgemäß die Gegensole GS einem zusätzlichen Kondensator KO2 zugeführt. Dem zusätzlichen Kondensator KO2 wird ein Teil der Brüden über eine Dampfleitung DL2 zugeführt, ohne dass diese Brüden in dem Verdichter VD verdichtet werden. Dieser Vorwärmer oder Kondensator KO2 wird somit erfindungsgemäß beheizt durch nicht verdichtete Brüden, die in einer bevorzugten Ausführung nach dem Brüdenwäscher BW abgezogen werden und nicht durch den Verdichter VD geführt werden. In einer weiteren bevorzugten Ausführung wird der Kondesator KO2 zusätzlich durch den Dampf beheizt, der zur Entfernung nicht kondensierbarer Gase aus dem Heizkörper KO1 entnommen werden muss. Dieser Dampf wird über eine Dampfleitung DL3 und über die Dampfleitung DL2 dem weiteren Kondensator KO2 zugeführt.

Der Massenstrom der dem Kondensator KO2 zugeführten Brüden wird mit einem Dampfregelventil DRV beeinflusst, womit der Druck im Kristallisator KR direkt geregelt wird. Der Dampf kondensiert dabei im Kondensator KO2, und das entstehende Kondensat wird über eine Kondensatleitung KL abgeführt und an geeigneter Stelle mit dem sonstigen, aus dem Kondensator KO1 ablaufenden Kondensat vereinigt, hier beispielhaft zwischen den Vorwärmern VW1 und VW2.

Wurde bisher nach dem Stand der Technik der Volumenstrom in den oberen Einlass des Kristallisators durch Stellung von V1 eingestellt (s. Fig. 1), so wird in einer besonders bevorzugten Ausführung der Erfindung der zusätzlich erwärmte Gegensolestrom aus dem Kondensator KO2 dem oberen Einlass des Kristallisators zugeführt und mit beispielsweise einer Regelklappe V4 eingestellt. Regelklappe V1 ist in dieser Ausführung geschlossen, wobei es aber auch möglich ist, durch die Stellungen von V1 und V4 eine Mischtemperatur am oberen Einlass in den einzustellen.

In einer bevorzugten Ausführung wird der zur Entfernung nicht kondensierbarer Gase aus dem Heizkörper KO1 entnommene kleine Anteil des komprimierten Dampfs über die Dampfleitung DL3, die einen geringen Durchmesser aufweist, nach der Blende BL aus der Dampfleitung DL1 abgezweigt und vor dem Dampfregelventil in die Dampfleitung DL2 eingebracht. Da der Druck dieses Dampfs deutlich höher ist als der Druck in der Dampfleitung DL2, beeinflusst die Stellung des Dampfregelventils DRV den Massenstrom dieses Dampfs nicht. Im Betrieb ist das Dampfregelventil DRV nur kurzzeitig ganz geschlossen. Während dieser kurzen Zeit werden keine nicht kondensierbaren Gase aus dem System entfernt, was technisch nicht schädlich ist. Ist das Dampfregelventil DRV jedoch länger geschlossen, muss über V3 komprimierter Dampf an die Atmosphäre abgegeben werden.

In einer bevorzugten Ausführung des Beispiels ist der Kondensator KO2 ein Röhrenwärmetauscher, das Dampfregelventil DRV ein Drehkegelventil, und die Regelung ein PI-Regler (Proportional-Integral- Regler) mit einem vorgegebenen Druck im Brüdenraum BR des Kristallisators KR als Führungsgröße und der Stellung des Dampfregelventils DRV als Ausgangsgröße. Über den Kondensator KO2 wird etwa die Hälfte der insgesamt zugeführten Gegensole erwärmt. Die Ausgangstemperatur am Wärmetauscher des Kondensators KO2 liegt etwa 20 K unterhalb der Siedetemperatur im Kristallisator KR. Die thermische Leistung beträgt etwa die Hälfte bis zwei Drittel der elektrischen Antriebsenergie des Brüdenverdichters VD, wodurch sich eine Produktionssteigerung bezogen auf das Kristallisat von etwa 3-5 % ergibt.

## Patentansprüche

1. Verfahren, bei dem in einem Kristallisator (KR) einer Thermokompressionsanlage mit mechanischer oder thermischer Brüdenverdichtung und Frischsolevorwärmung im Gegenstrom Kristallisat aus einer Sole erzeugt wird, **dadurch gekennzeichnet, dass** nicht verdichtete Brüden in einem Kondensator (KO2) indirekt an einem Teilstrom (GS) dem Kristallisator (KR) zuströmender, nicht mit heißem Kondensat auf maximal mögliche Temperatur vorgewärmter Sole kondensiert werden.

2. Verfahren nach Anspruch 1, **dadurch gekennzeichnet, dass** der Druck im Brüdenraum (BR) des Kristallisators (KR) durch die Regelung des Massenstroms der unverdichtet ausgekoppelten Brüden geregelt wird.

3. Verfahren nach Anspruch 1 oder 2, **dadurch gekennzeichnet, dass** nur ein Teilstrom (GS) der insgesamt kälter als mit maximal möglicher Temperatur zugeführten Sole durch abgezogene nicht verdichtete Brüden erwärmt wird.

4. Verfahren nach einem der Ansprüche 1 bis 3, **dadurch gekennzeichnet, dass** der erwärmte Teilstrom (GS) der zugeführten, nicht mit heißem Kondensat auf maximal mögliche Temperatur erwärmten Sole derart in den Apparat eingebracht wird, dass er zur Beeinflussung des Korngrößenspektrums in den unteren Bereich des Kristallisators (KR) eingebracht wird, aus dem das Kristallisat entnommen wird.

5. Verfahren nach Anspruch 4, **dadurch gekennzeichnet, dass** der erwärmte Teilstrom (GS) der zugeführten, nicht mit heißem Kondensat auf maximal mögliche Temperatur erwärmten Sole oberhalb der Entnahmestelle (E) für Kristallisat in den Kristallisator eingebracht wird.

6. Verfahren nach einem der Ansprüche 1 bis 5, **dadurch gekennzeichnet, dass** der erwärmte Teilstrom (GS) an zugeführter, nicht mit heißem Kondensat auf maximal mögliche Temperatur erwärmter Sole ganz oder teilweise in einen Bereich des Kristallisators (KR) eingebracht wird, in dem das Korngrößenspektrum nicht beeinflusst wird.

7. Verfahren nach einem der Ansprüche 1 bis 6, **dadurch gekennzeichnet, dass** die nicht verdichteten Brüden aus oder nach einem Brüdenwäscher (BW) entnommen werden.

8. Verfahren nach einem der Ansprüche 1 bis 7, **dadurch gekennzeichnet, dass** zusätzlich Dampf, der zur Entfernung nicht kondensierbarer Gase aus einem Heizkörper des Kristallisators (KR) entnommen wird, an dem zu erwärmenden Teilstrom (GS) von dem Kristallisator (KR) zuströmender, nicht mit heißem Kondensat auf maximal mögliche Temperatur vorgewärmter Sole kondensiert wird.

9. Thermokompressionsanlage zur Gewinnung von Kristallisat aus Sole, mit einem Kristallisator (KR), dessen Brüdenraum (BR) direkt oder indirekt über eine Dampfleitung (DL2) mit einem Kondensator (KO2) verbunden ist, um einen Teil der dem Brüdenraum (BR) entnommenen nicht verdichteten Brüden in dem Kondensator (KO2) an einem Teilstrom (GS) dem Kristallisator (KR) zugeführter, nicht auf die maximal mögliche Temperatur vorgewärmter Sole zu kondensieren.

10. Thermokompressionsanlage nach Anspruch 9, **dadurch gekennzeichnet, dass** in der Dampfleitung (DL2) auf der Dampfseite des Kondensators (KO2) ein Dampfregelventil (DRV) angeordnet ist.

11. Thermokompressionsanlage nach Anspruch 9 oder 10, **dadurch gekennzeichnet, dass** der Kondensator (KO2) über die Dampfleitung (DL2) oder eine weitere Dampfleitung (DL3) mit einer Entlüftung eines Heizkörpers (KO1) des Kristallisators (KR) verbunden ist, um dem Kondensator (KO2) Dampf, der dem Heizkörper zur Entfernung nicht kondensierbarer Gase entnommen wird, zuzuführen.
